# FASCICULE DE BREVET EUROPEEN

(11) **EP 1 568 021 B1**
(45) Date de publication et mention de la délivrance du brevet: **23.08.2006**
(21) Numéro de dépôt: 03789528.1
(22) Date de dépôt: 28.11.2003
(51) Int. Cl.: G11B 7/24

(54) **PROCEDE DE FABRICATION D'UN DISQUE OPTIQUE ENREGISTRABLE, DISQUE OPTIQUE ET COUCHE INSCRIPTIBLE OBTENU PAR LEDIT PROCEDE**
VERFAHREN ZUM HERSTELLEN EINER OPTISCHEN SPEICHERPLATTE, DURCH DAS VERFAHREN ERHALTENE BESCHREIBBARE SPEICHERPLATTE UND SCHICHT
METHOD FOR MAKING A RECORDABLE OPTICAL DISC, OPTICAL DISC AND WRITEABLE LAYER OBTAINED BY SAID METHOD

(30) Priorité: 28.11.2002 FR 0214981
(43) Date de publication de la demande: 31.08.2005
(73) Titulaire: MPO International, 53700 Averton (FR); COMMISSARIAT A L'ENERGIE ATOMIQUE, 75752 Paris Cédex 15 (FR)
(72) Inventeur: PERRIER, Robin, F-38000 Grenoble (FR); ANCIANT, Romain, F-38000 Grenoble (FR); ARMAND, Marie-Françoise, F-38410 Vaulnaveys-le-Haut (FR)
(74) Mandataire: Breese, Pierre
(86) Numéro de dépôt international: PCT/FR2003/003528
(87) Numéro de publication internationale: WO 2004/051638

(56) Documents cités:
- EP-A- 0 605 891
- EP-A- 1 215 669
- US-A- 4 640 860
- US-A1- 2002 119 278

## Description

La présente invention concerne le domaine des disques inscriptibles multiniveaux et plus particulièrement au domaine de l'enregistrement optique irréversible, c'est-à-dire autorisant un seul enregistrement, plusieurs lectures et pas d'effacement ou de réécriture.

Une application est, par exemple, l'enregistrement sur disques optiques multiniveaux de type CD (« Compact Disc »), DVD (« Digital Versatile Disc ») ou encore BD (« Bluray Disc »), « R » (« Recordable »), WORM (« Write-Once Read Many »), DRAW (« Direct Read After Write ») à n niveaux enregistrables.

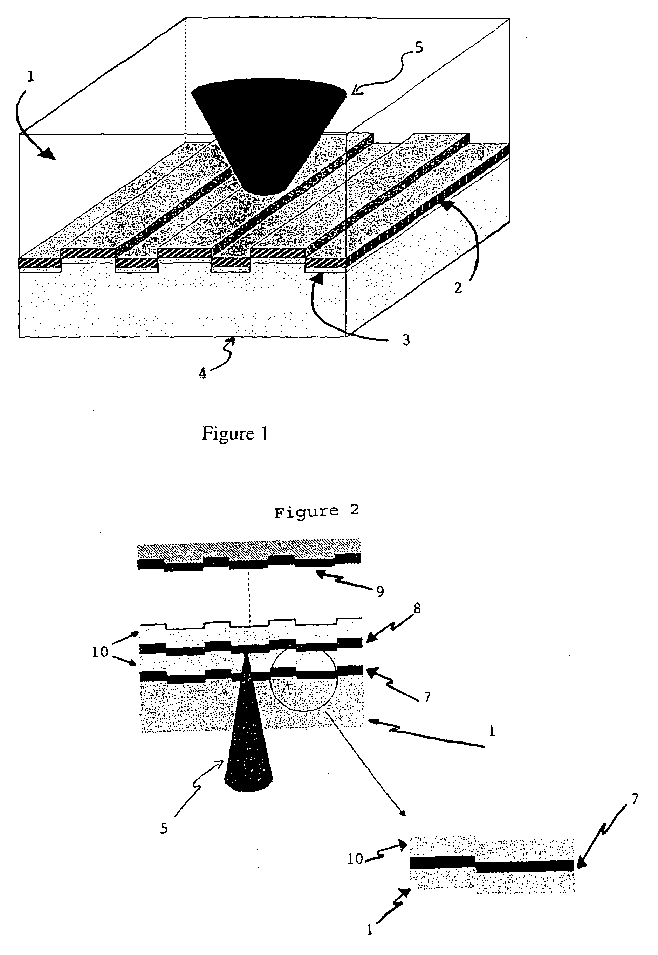

Actuellement, la grande majorité des disques simple niveau inscriptibles une fois utilise une technique à base de colorant organique. La structure d'un disque selon l'art antérieur est décrite dans le schéma de la figure 1.

Généralement, ces disques sont constitués d'un empilement optique comprenant :
- Un substrat transparent (1) en plastique, polycarbonate par exemple.
- Une couche de colorant (2) sensible à la longueur d'onde d'écriture.
- Une couche réfléchissante, (3) formée par un alliage d'or ou d'argent par exemple.
- Une ou deux couches de protection (4).

Les données sont écrites en spirale sur la surface du disque en focalisant une diode laser (5) de puissance élevée sur la couche de colorant à travers le substrat, si bien qu'au final, elles sont représentées par une alternance de zones non-écrites de réflexion haute et de zones écrites de réflexion basse. La lecture des données est faite avec une diode laser de basse puissance. Le suivi de cette spirale est rendu possible, à la lecture comme à l'écriture, par la présence d'un sillon pré-gravé sur le substrat en plastique.

Des couches actives basées sur des matériaux organiques sont par exemple décrites dans le brevet américain US4940618, ou le brevet européen EP353393.

Cependant, la trop faible transmission des colorants organiques empêche l'empilement de plusieurs niveaux inscriptibles. On est alors obligé de se tourner vers une solution inorganique.

On connaît également dans l'état de la technique l'utilisation de matériaux appartenant à la famille des cermets, terme usuel pour l'homme du métier pour désigner des combinaisons céramiques métalliques déposées par projection d'un matériaux diélectrique et d'un ou de plusieurs éléments métalliques.

On se référera par exemple au brevet américain US4640860 décrivant un procédé de fabrication d'un tel disque utilisant des cermets. Le type de couche proposé par ce brevet ne permet toutefois pas de réaliser des supports d'enregistrement de haute densité, car les couches cermets présentent des taux d'absorption et de réflexion trop élevés pour permettre d'envisager des structures multicouches.

Des solutions similaires sont décrites dans le brevet japonais 56156942 décrivant un disque présentant un film de type cermet sur un support cylindrique. La surface d'écriture est certes augmentée, mais un tel support n'est pas compatible avec les lecteurs généralement répandus.

L'art antérieur connaît également des disques optiques multiniveaux. Le document EP 1 215 669 (MATSUSHITA) décrit en particulier une structure de disque optique multiniveaux dans laquelle les couches inscriptibles sont constituées d'un matériau de type tellure, TeO-M, M pouvant être choisi parmi un groupe prédéfini d'éléments chimiques. Ce document EP 1 215 669 ne décrit aucunement l'utilisation de cermets comme couche inscriptible dans un disque optique multiniveaux.

Le but de l'invention est de remédier aux inconvénients des solutions de l'art antérieur en permettant la réalisation de supports d'enregistrement avec une grande densité d'informations, sur des supports exploitables avec des équipements de lecture standard.

A cet effet, l'invention concerne selon son acception la plus générale un procédé de fabrication d'un disque optique enregistrable comportant une étape de formation d'une couche inscriptible avant comprenant un alliage métallique et un diélectrique constituant un cermet caractérisé en ce qu'il comporte au moins une étape antérieure de formation d'une couche inscriptible arrière et de dépôt sur ladite couche inscriptible d'une couche intercalaire transparente, et en ce que ladite couche inscriptible avant présente un taux de transmission supérieur ou égal à 45%, préférentiellement supérieur à 55%.

Le procédé comporte de préférence une pluralité d'étapes de formation de couches inscriptibles arrières, certaines au moins desdites étapes consistant à réaliser un co-dépôt d'un alliage métallique et d'un diélectrique formant un cermet, présentant un taux de transmission supérieur ou égal à 45% et préférentiellement supérieur à 55%, les couches inscriptibles étant séparées par des couches intercalaires transparentes, avantageusement appartenant à la famille constituée par Au-Si₃N₄, Au-Si₃N₄, d'Au-SiO₂, Al-Al₂O₃, In-SiO₂.

Selon un mode de mise en oeuvre préféré, le cermet est du type Au-Si₃N₄, la proportion atomique d'or étant supérieure à 50%.

Avantageusement, les couches inscriptibles présentent une épaisseur comprise entre 5 et 50 nm.

Selon un mode de réalisation particulièrement avantageux, les couches inscriptibles sont réalisées par dépôt par co-pulvérisation sur un substrat d'une couche active d'Au-Si₃N₄ d'environ 20 nm avec une quantité d'or d'environ 80% atomique et une quantité de Si₃N₄ d'environ 20% atomique.

L'invention concerne également un disque optique enregistrable constitué par un substrat et une couche active de type Cermet, caractérisé en ce que ladite couche active recouvre au moins une couche arrière inscriptible et en ce que ladite couche active Cermet présente un taux de transmission supérieur ou égal à 45% et préférentiellement supérieur à 55%.

De préférence, lesdites couches actives Cermet recouvrant une couche arrière inscriptible, les couches consécutives étant séparées par une couche formant un substrat transparent.

L'invention concerne encore une couche inscriptible constituée par un dépôt de cermet sur un substrat caractérisé en ce qu'elle présente un taux de transmission supérieur ou égal à 45% et préférentiellement supérieur à 55%, le cermet appartenant préférentiellement à la famille constituée par Au-Si₃N₄, Au-Si₃N₄, d'Au-SiO₂, Al-Al₂O₃, In-SiO₂ et étant avantageusement une combinaison Au-Si₃N₄, la proportion atomique d'or étant supérieure à 50% et l'épaisseur comprise entre 5 et 50 nm.

L'invention concerne encore un procédé d'enregistrement d'un disque inscriptible par activation d'une pluralité de couches inscriptibles superposées avec au moins un faisceau d'activation focalisé dans des plans distincts, caractérisé en qu'il comporte au moins une activation d'une couche positionnée dans un plan avant, ladite couche présentant un matériau cermet présentant un taux de transmission supérieur ou égal à 45% et préférentiellement supérieur à 55% présentent une épaisseur comprise entre 5 et 50 nm, et au moins une activation d'une couche positionnée dans un plan arrière.

L'invention sera mieux comprise à la lecture de la description qui suit, se référence aux figures annexées correspondant un mode de réalisation non limitatif où :
- la figure 1 représente une vue en coupe d'un disque optique selon l'état de la technique.
- la figure 2 représente une vue en coupe d'un disque optique selon l'invention
- la figure 3 représente le tableau des propriétés optiques mesurées avant et après écriture pour une couche de 20 nm d'épaisseur de Au₈₁(Si₃N₄)₁₉
- les figures 4 et 5 représentent les signaux 3T et 14T pour une fréquence F=19.6 MHz, Vlinéaire=3.9 m/s, P=10 mW et une couche de 20 nm d'épaisseur de Au₈₁(Si₃N₄)₁₉ (format DVD)
- La figure 6 représente le tableau des propriétés optiques mesurées avant écriture pour une couche de 20 nm d'épaisseur de Au81(Si3N4)19
- La figure 7 représente la courbe de variation de la largeur de la porteuse (jitter) 2T et 8T digitaux en fonction de la puissance d'écriture pour une fréquence d'écriture de 41 MHz et une vitesse linéaire de 5.1 m/s. Couche de 20 nm d'épaisseur de Au₈₁(Si₃N₄)₁₉ (format Bluray)
- Les figures 8 et 9 représentent les signaux 2T et 8T correspondant à une fréquence F=41 MHz, Vlinéaire=5.1 m/s, P=8 mW pour une couche de 20 nm d'épaisseur de Au₈₁(Si₃N₄)₁₉.

La figure 2 représente une vue en coupe selon un plan radial d'un disque conforme à l'invention.

Le disque selon l'invention est constitué de façon connue par un substrat transparent (1) formant le dos du disque. Il s'agit par exemple d'un disque en polycarbonate (PC) ou en PMMA sur lequel sont formées plusieurs couches inscriptibles (7, 8) séparées par des couches intercalaires transparentes (10).

Une dernière couche inscriptible - la couche arrière (9) est revêtue par une couche de protection protégeant contre les dégradations physiques.

Les couches inscriptibles (7, 8) sont choisies pour être suffisamment réflectives pour être vues dans un testeur ou un graveur, mais aussi assez absorbantes pour permettre l'inscription d'information afin qu'elles aient un taux de transmission permettant d'atteindre les niveaux supérieurs ou arrière.

L'invention réside notamment dans le choix de cermets très transparents (T≈45% et plus) comme couche active pour chaque niveau semi-transparent. Leurs réflexions et absorptions sont de fait bien inférieures à celles connues dans l'art antérieur.

Les fractions atomiques de métal dans les alliages mis en oeuvre dans l'invention sont de plus bien supérieures à celles utilisées dans l'art antérieur. Dans l'invention, les alliages comportent une proportion d'alliages métalliques supérieurs à 50%, alors que dans l'art antérieur, la proportion d'alliages métalliques est de l'ordre de 20% en proportion atomique.

Chacune des couches inscriptibles (7, 8) présente une épaisseur de 5 à 50 nm. Une ou plusieurs couches supplémentaires transparentes peuvent être ajoutées pour augmenter la réflexion et/ou le contraste d'un niveau.

La proportion de métal augmente de la couche avant vers la couche la plus éloignée. Les couches de protection sont optionnelles. La couche de protection n'est pas indispensable au fonctionnement du disque, mais permet de le protéger.

Dans la présente invention, on désigne par « avant » la couche la plus proche du faisceau incident utilisé pour l'enregistrement, et le terme « arrière » désigne la couche la plus éloignée.

Les modes d'obtention de ces matériaux sont divers (mélange à partir de composés primaires nanométriques, procédés sol-gel, dépôts sous vide...), mais leur fabrication par pulvérisation cathodique sous vide est l'une des plus utilisée.

Le dépôt est réalisé sur des substrats portés à une température de l'ordre de 100°C à 150°C. Le procédé comporte des opérations connues par ailleurs de dégazage de la cible et de mise à l'air libre des échantillons.

La description qui suit se réfère à un exemple particulier de mise en oeuvre de l'invention pour la fabrication d'un DVD-R fonctionnant à une longueur d'onde λ=650 nm.

Sur un substrat (1) formé par un disque de polycarbonate d'une épaisseur de 0,6 millimètres, on dépose une couche active d'Au-Si₃N₄ d'environ 20 nm est déposée par co-pulvérisation avec une intensité de 0.044 mA/cm sur la cible de silicium et 0.011 mA/cm sur celle d'or. La pression est 10⁻² mbar. Le débit d'argon, comme celui d'azote, est 40 sccm. La quantité d'or est alors de 81% atomique (celle de Si₃N₄ donc de 19% atomique).

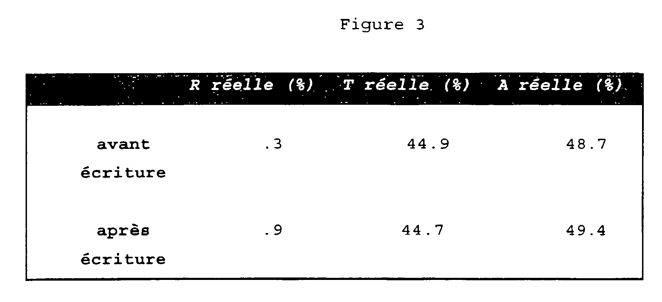

Les propriétés optiques mesurées avant et après écriture sont données dans le tableau représenté en figure 3 présentant les propriétés optiques mesurées avant et après écriture pour une couche de 20 nm d'épaisseur de Au₈₁(Si₃N₄)₁₉·

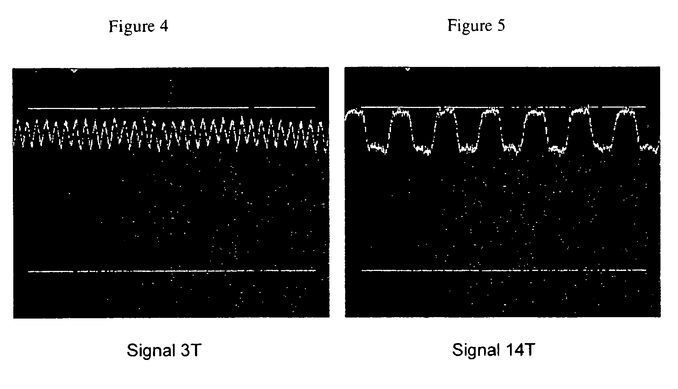

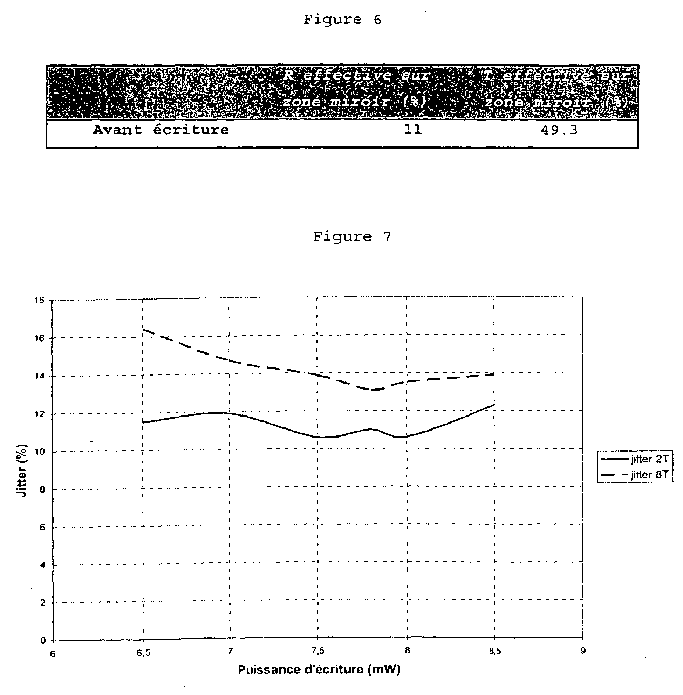

Pour une fréquence d'écriture de 19.6 MHz, une vitesse linéaire de 3.9 m/s et une puissance d'écriture de 10 mW, les mesures ont donné une modulation de 0.26, une résolution de 0.58 et une asymétrie de -6.9%. Les signaux 3T et 14T sont montrés en figures 4 et 5 correspondant à une fréquence F=19.6 MHz, Vlinéaire=3.9 m/s, P=10 mW et une couche de 20 nm d'épaisseur de Au81(Si3N4)19.

Selon un deuxième exemple, l'invention est appliquée au cas du Blu disc avec une longueur d'onde d'inscription et de lecture λ=405 nm, sur un substrat polycarbonate 1.2 mm et avec une couche de 100 µm.

La figure 6 représente le tableau des propriétés optiques mesurées avant écriture pour une couche de 20 nm d'épaisseur de Au81(Si3N4)19.

On a mesuré les largeurs de la porteuse (jitter) des signaux 2T et 8T digitalisés en fonction de la puissance d'écriture (figure 4) pour une fréquence d'écriture de 41 MHz et une vitesse linéaire de 5.1 m/s, ce qui correspond à une densité de 15 GB pour un track pitch de 0.32µm.

La figure 7 représente la courbe de largeur de la porteuse (jitter) 2T et 8T digitaux en fonction de la puissance d'écriture pour une fréquence d'écriture de 41 MHz et une vitesse linéaire de 5.1 m/s. Couche de 20 nm d'épaisseur de Au₈₁(Si₃N₄)₁₉. Ce paramètre tient compte du degré de distorsion et de la régularité des marques inscrites. L'analyse spectrale à la fréquence νᵣ fournit un signal proportionnel à la transformée de Fourier des variations de courants induites lors du balayage du spot sur les marques amorphes. Les variations de réflectivité ne sont pas abruptes, et ce, du fait de la nature gaussienne du spot de lecture d'une part, de la forme des marques ensuite, et d'autres phénomènes d'origines diverses introduisant des variations sur la longueur des marques inscrites d'autre part. Tout ceci se traduit par un élargissement de la densité spectrale de la porteuse à la fréquence de lecture. Cette dégradation du spectre peut entraîner des erreurs de lecture. Elle est quantifiable en mesurant la largeur de la porteuse et est couramment appelée jitter (exprimé en ns ou en %).

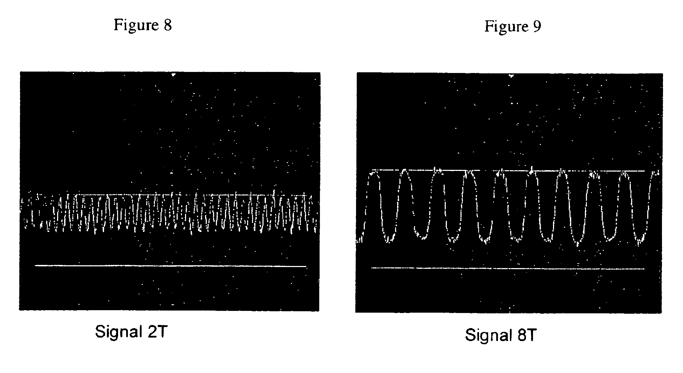

Dans cette configuration, et pour une puissance d'écriture de 8 mW, on a une modulation de 0.688, une résolution de 0.463 et une asymétrie de -5.6%. Les signaux 2T et 8T sont montrés en figures 8 et 9 correspondant à une fréquence F=41 MHz, Vlinéaire=5.1 m/s, P=8 mW pour une couche de 20 nm d'épaisseur de Au₈₁(Si₃N₄)₁₉.

## Revendications

1. Procédé de fabrication d'un disque optique enregistrable comportant une étape de formation d'une couche inscriptible (7) avant comprenant un alliage métallique et un diélectrique constituant un cermet, **caractérisé en ce qu'**il comporte au moins une étape antérieure de formation d'une couche inscriptible arrière (8, 9) et de dépôt sur ladite couche inscriptible d'une couche intercalaire transparente (10), et **en ce que** ladite couche inscriptible (7) avant présente un taux de transmission supérieur ou égal à 45%.

2. Procédé de fabrication d'un disque optique enregistrable selon la revendication 1, **caractérisé en ce que** le taux de transmission de la couche inscriptible avant est supérieur à 55%.

3. Procédé de fabrication d'un disque optique enregistrable selon la revendication 1, **caractérisé en ce qu'**il comporte une pluralité d'étapes de formation de couches inscriptibles arrières, certaines au moins desdites étapes consistant à réaliser un co-dépôt d'un alliage métallique et d'un diélectrique formant un cermet, présentant un taux de transmission supérieur ou égal à 45%, les couches inscriptibles étant séparées par des couches (10) intercalaires transparentes.

4. Procédé de fabrication d'un disque optique enregistrable selon l'une au moins des revendications précédentes, **caractérisé en ce que** les couches inscriptibles présentant un taux de transmission supérieur ou égal à 45% sont réalisées par dépôt d'un cermet appartenant à la famille constituée par Au-Si₃N₄, Au-Si₃N₄, d'Au-SiO₂, Al-Al₂O₃, In-SiO₂.

5. Procédé de fabrication d'un disque optique enregistrable selon l'une au moins des revendications précédentes, **caractérisé en ce que** les couches inscriptibles présentant un taux de transmission supérieur ou égal à 45% sont réalisées par dépôt d'un cermet Au-Si₃N₄, la proportion atomique d'or étant supérieure à 50%.

6. Procédé de fabrication d'un disque optique enregistrable selon l'une au moins des revendications précédentes, **caractérisé en ce que** les couches inscriptibles présentant un taux de transmission supérieur ou égal à 45% présentent une épaisseur comprise entre 5 et 50 nm.

7. Procédé de fabrication d'un disque optique enregistrable selon l'une quelconque des revendications 2 à 6, dans lequel les couches inscriptibles avant présentent un taux de transmission supérieur à 55%.

8. Procédé de fabrication d'un disque optique enregistrable selon l'une au moins des revendications précédentes, **caractérisé en ce que** les couches inscriptibles sont réalisées par dépôt par co-pulvérisation sur un substrat d'une couche active d'Au-Si₃N₄ d'environ 20 nm avec une quantité d'or d'environ 80% atomique et une quantité de Si₃N₄ d'environ 20% atomique.

9. Disque optique enregistrable multiniveaux comprenant un substrat et une couche active (7,8) de type Cermet, **caractérisé en ce que** ladite couche active (7,8) recouvre au moins une couche arrière inscriptible (9), **en ce que** ladite couche active Cermet présente un taux de transmission supérieur ou égal à 45%, et **en ce qu'**il comprend en outre, entre ladite couche active (7,8) et ladite au moins une couche arrière inscriptible (9), au moins une couche intercalaire transparente.

10. Disque optique enregistrable comprenant un substrat et une couche active de type Cermet, selon la revendication 9, **caractérisé en ce qu'**il comporte une pluralité de couche active Cermet (7,8) présentant un taux de transmission supérieur ou égal à 45%, lesdites couches actives Cermet recouvrant une couche arrière inscriptible (9), les couches consécutives étant séparées par une couche (10) formant un substrat transparent.

11. Disque optique enregistrable, selon la revendication 9 ou 10, **caractérisé en ce que** les couches inscriptibles présentant un taux de transmission supérieur ou égal à 45% sont réalisées par dépôt d'un cermet appartenant à la famille constituée par Au-Si₃N₄, Au-Si₃N₄, d'Au-SiO₂, Al-Al₂O₃, In-SiO₂.

12. Disque optique enregistrable, selon la revendication 9 ou 10, **caractérisé en ce que** les couches inscriptibles présentant un taux de transmission supérieur ou égal à 45% sont réalisées par dépôt d'un cermet Au-Si₃N₄, la proportion atomique d'or étant supérieure à 50%.

13. Disque optique enregistrable, selon la revendication 9 ou 10, **caractérisé en ce que** les couches inscriptibles présentant un taux de transmission supérieur ou égal à 45% présentent une épaisseur comprise entre 5 et 50 nm.

14. Disque optique enregistrable, selon l'une quelconque des revendications 9 à 13, **caractérisé en ce que** les couches inscriptibles présentant un taux de transmission supérieur ou égal à 45% sont constituée par une combinaison d'Au-Si₃N₄ avec une quantité d'or d'environ 80% atomique et une quantité de Si₃N₄ d'environ 20% atomique.

15. Disque optique enregistrable, selon l'une quelconque des revendications 9 à 14 dans lequel les couches inscriptibles présentent un taux de transmission supérieur à 55%.

16. Couche inscriptible constituée par un dépôt de cermet sur un substrat (1) dans un disque optique multiniveaux, **caractérisé en ce qu'**elle présente un taux de transmission supérieur ou égal à 45%.

17. Couche inscriptible selon la revendication 16, **caractérisé en ce que** le cermet appartient à la famille constituée par Au-Si₃N₄. Au-Si₃N₄, d'Au-SiO₂, Al-Al₂O₃, In-SiO₂.

18. Couche inscriptible selon la revendication 16, **caractérisé en ce que** le cermet est une combinaison Au-Si₃N₄, la proportion atomique d'or étant supérieure à 50%.

19. Couche inscriptible selon la revendication 16, **caractérisé en ce que** le cermet présente une épaisseur comprise entre 5 et 50 nm.

20. Couche inscriptible selon la revendication 16, **caractérisé en ce que** le cermet est une combinaison d'Au-Si₃N₄ avec une quantité d'or d'environ 80% atomique et une quantité de Si₃N₄ d'environ 20% atomique.

21. Couche inscriptible selon la revendication 16 dans lequel ladite couche inscriptible présente un taux de transmission supérieur à 55%.

22. Procédé d'enregistrement d'un disque inscriptible par activation d'une pluralité de couches inscriptibles superposées avec au moins un faisceau d'activation focalisé dans des plans distincts, **caractérisé en qu'**il comporte au moins une activation d'une couche (7, 8) positionnée dans un plan avant, ladite couche présentant un matériau cermet présentant un taux de transmission supérieur ou égal à 45% présentant une épaisseur comprise entre 5 et 50 nm, et au moins une activation d'une couche (9) positionnée dans un plan arrière.

23. Procédé d'enregistrement d'un disque inscriptible selon la revendication 22 dans lequel les couches inscriptibles présentent un taux de transmission supérieur à 55%.

## Claims

1. Method of manufacturing a recordable optical disc, comprising a step of forming a top writeable layer (7) comprising a metal alloy and a dielectric constituting a cermet, **characterised in that** it comprises at least one previous step of forming a bottom writeable layer (8, 9) and of depositing a transparent dividing layer (10) on said writeable layer and **in that** said top writeable layer (7) has a transmission rate of at least 45%.

2. Method of manufacturing a recordable optical disc according to claim 1, **characterised in that** the transmission time of the top writeable layer is higher than 55%.

3. Method of manufacturing a recordable optical disc according to claim 1, **characterised in that** it comprises a plurality of steps of forming bottom writeable layers, at least some of said steps consisting of co-depositing a metal alloy and a dielectric forming a cermet, with a transmission rate of at least 45%, the writeable layers being separated by transparent dividing layers (10).

4. Method of manufacturing a recordable optical disc according to at least one of the preceding claims, **characterised in that** the writeable layers with a transmission rate of at least 45% are made by depositing a cermet belonging to the family consisting of Au-Si₃N₄, Au-Si₃N₄, Au-SiO₂, Al-Al₂O₃, In-SiO₂.

5. Method of manufacturing a recordable optical disc according to at least one of the preceding claims, **characterised in that** the writeable layers with a transmission rate of at least 45% are made by depositing an Au-Si₃N₄ cermet, the atomic proportion of gold being higher than 50%.

6. Method of manufacturing a recordable optical disc according to at least one of the preceding claims, **characterised in that** the writeable layers with a transmission rate of at least 45% have a thickness comprised between 5 and 50 nm.

7. Method of manufacturing a recordable optical disc according to any one of the claims from 2 to 6, in which the top writeable layers have a transmission rate of more than 55%.

8. Method of manufacturing a recordable optical disc according to at least one of the preceding claims, **characterised in that** the writeable layers are made by depositing by co-spraying an active layer of Au-Si₃N₄ of around 20 nm on a substrate, with an atomic proportion of gold of approximately 80% and an atomic proportion of Si₃N₄ of approximately 20%.

9. Multilayer recordable optical disc comprising a substrate and an active layer (7, 8) such as a cermet, **characterised in that** said active layer (7, 8) covers at least one writeable bottom layer (9), **in that** said active cermet layer has a transmission rate of at least 45%, and **in that** it also comprises, between said active layer (7, 8) and said at least one bottom writeable layer (9) at least one transparent dividing layer.

10. Recordable optical disc comprising a substrate and an active layer such as a cermet according to claim 9, **characterised in that** it comprises a plurality of cermet active layers (7, 8) with a transmission rate of at least 45%, said cermet active layers covering a bottom writeable layer (9), the consecutive layers being separated by a layer (10) forming a transparent substrate.

11. Recordable optical disc according to claim 9 or 10, **characterised in that** the writeable layers with a transmission rate of at least 45% are made by depositing a cermet belonging to the family consisting of Au-Si₃N₄, Au-Si₃N₄, Au-SiO₂, Al-Al₂O₃, In-SiO₂.

12. Recordable optical disc according to claim 9 or 10, **characterised in that** the writeable layers with a transmission rate of at least 45% are made by depositing an Au-Si₃N₄ cermet, the atomic proportion of gold being higher than 50%.

13. Recordable optical disc according to claim 9 or 10, **characterised in that** the writeable layers with a transmission rate of at least 45% have a thickness comprised between 5 and 50 nm.

14. Recordable optical disc according to any one of the preceding claims from 9 to 13, **characterised in that** the writeable layers with a transmission rate of at least 45% are made up of a combination of Au-Si₃N₄ with an atomic proportion of gold of approximately 80% and an atomic proportion of Si₃N₄ of approximately 20%.

15. Recordable optical disc according to any one of the claims from 9 to 14, in which the writeable layers have a transmission rate of more than 55%.

16. Writeable layer made up of a deposit of cermet on a substrate (1) in a multilayer optical disc, **characterised in that** it has a transmission rate of at least 45%.

17. Writeable layer according to claim 16, **characterised in that** the cermet belongs to the family consisting of Au-Si₃N₄, Au-Si₃N₄, Au-SiO₂, Al-Al₂O₃, In-SiO₂.

18. Writeable layer according to claim 16, **characterised in that** the cermet is a combination of Au-Si₃N₄, the atomic proportion of gold being higher than 50%.

19. Writeable layer according to claim 16, **characterised in that** the cermet has a thickness comprised between 5 and 50 nm.

20. Writeable layer according to claim 16, **characterised in that** the cermet is a combination of Au-Si₃N₄ with an atomic proportion of gold of approximately 80% and an atomic proportion of Si₃N₄ of approximately 20%.

21. Writeable layer according to claim 16 in which said writeable layer has a transmission rate of more than 55%.

22. Method of recording a writeable disc by activating a plurality of superposed writeable layers with at least one activation beam focussing on different planes, **characterised in that** it comprises at least one activation of a layer (7, 8) positioned in a top plane, said layer consisting of a cermet material having a transmission rate of at least 45% with a thickness comprised between 5 and 50 nm, and at least one activation of a layer (9) positioned in a bottom plane.

23. Method of recording a writeable disc according to claim 22 in which the writeable layers have a transmission rate of more than 55%.

## Patentansprüche

1. Herstellungsverfahren einer registrierbaren optischen Speicherplatte mit einer Stufe zur Bildung einer vorderen beschreibbaren Schicht (7) mit einer Metalllegierung und einem Dielektrikum, die ein Cermet bilden, **dadurch gekennzeichnet, dass** es wenigstens eine vorherige Stufe zur Bildung einer hinteren beschreibbaren Schicht (8, 9) und Depotschicht auf der genannten beschreibbaren Schicht einer transparenten Zwischenschicht (10) umfasst und dass die genannte vordere beschreibbare Schicht (7) ein Übertragungsniveau von gleich oder größer als 45 % aufweist.

2. Herstellungsverfahren einer optischen Speicherplatte gemäß Anspruch 1, **dadurch gekennzeichnet, dass** das Übertragungsniveau der vorderen beschreibbaren Schicht größer ist als 55 %.

3. Herstellungsverfahren einer registrierbaren optischen Speicherplatte gemäß Anspruch 1, **dadurch gekennzeichnet, dass** sie eine Vielzahl von Stufen zur Bildung von hinteren beschreibbaren Schichten umfasst, wobei zumindest einige der genannten Stufen in der Realisierung eines Ko-Depots einer Metalllegierung und eines Dielektrikums bestehen, die ein Cermet bilden und ein Übertragungsniveau von gleich oder größer als 45 % aufweisen, wobei die beschreibbaren Schichten durch transparente Zwischenschichten (10) getrennt sind.

4. Herstellungsverfahren einer registrierbaren optischen Speicherplatte gemäß wenigstens einem der vorherigen Ansprüche, **dadurch gekennzeichnet, dass** die ein Übertragungsniveau von gleich oder größer als 45 % aufweisenden beschreibbaren Schichten per Depot auf einem zur aus Au-Si₃N₄, Au-Si₃Ni₄, Au-SiO₂ Al-Al₂O₃, In-SiO₂ gebildeten Familie gehörenden Cermet realisiert werden.

5. Herstellungsverfahren einer registrierbaren Speicherplatte gemäß wenigstens einem der vorherigen Ansprüche, **dadurch gekennzeichnet, dass** die ein Übertragungsniveau von gleich oder größer als 45 % aufweisenden beschreibbaren Schichten per Depot eines Cermets Au-Si₃N₄ realisiert werden, wobei der Anteil an Goldatomen höher ist als 50 %.

6. Herstellungsverfahren einer registrierbaren optischen Speicherplatte gemäß wenigstens einem der vorherigen Ansprüche, **dadurch gekennzeichnet, dass** die ein Übertragungsniveau von gleich oder größer als 45 % aufweisenden beschreibbaren Schichten eine zwischen 5 und 50 nm inbegriffene Stärke aufweisen.

7. Herstellungsverfahren einer registrierbaren optischen Speicherplatte gemäß Anspruch 2 bis 6, in der die vorderen beschreibbaren Schichten ein Übertragungsniveau von größer als 55 % aufweisen.

8. Herstellungsverfahren einer registrierbaren optischen Speicherplatte gemäß wenigstens einem der vorherigen Ansprüche, **dadurch gekennzeichnet, dass** die beschreibbaren Schichten per Depot per Ko-Besprühung auf einem Substrat einer aktiven Schicht aus Au-Si₃N₄ von rund 20 nm mit einer Goldmenge von rund 80 % Atomen und einer Menge an Si₃Ni₄ von rund 20 % Atomen realisiert werden.

9. Registrierbare optische Multiniveau-Speicherplatte mit einem Substrat und einer aktiven Schicht (7, 8) vom Typ Cermet, **dadurch gekennzeichnet, dass** die genannte aktive Schicht (7, 8) wenigstens eine hintere beschreibbare Schicht (9) umfasst, dass die genannte aktive Cermet-Schicht ein Übertragungsniveau von gleich oder größer als 45 % aufweist und dass sie darüber hinaus zwischen der genannten aktiven Schicht (7, 8) und der genannten wenigstens einen hinteren beschreibbaren Schicht (9) wenigstens eine transparente Zwischenschicht umfasst.

10. Registrierbare optische Speicherplatte mit einem Substrat und einer aktiven Schicht vom Typ Cermet gemäß Anspruch 9, **dadurch gekennzeichnet, dass** sie eine Vielzahl von ein Übertragungsniveau von gleich oder größer als 45 % aufweisenden aktiven Cermet-Schichten (7, 8) umfasst, wobei die genannten aktiven Cermet-Schichten eine hintere beschreibbare Schicht (9) abdecken, wobei die folgenden Schichten durch eine ein transparentes Substrat bildende Schicht (10) getrennt werden.

11. Registrierbare optische Speicherplatte gemäß Anspruch 9 oder 10, **dadurch gekennzeichnet, dass** die ein Übertragungsniveau von gleich oder größer als 45 % aufweisenden beschreibbaren Schichten per Depot eines zur durch Au-Si₃N₄, Au-Si₃N₄, Au-SiO₂, Al-Al₂O₃, In-SiO₂ gebildeten Familie gehörenden Cermets realisiert werden.

12. Registrierbare optische Speicherplatte gemäß Anspruch 9 oder 10, **dadurch gekennzeichnet, dass** die ein Übertragungsniveau von gleich oder größer als 45 % aufweisenden beschreibbaren Schichten per Depot eines Cermet Au-Si₃N₄ realisiert werden, wobei der Anteil an Goldatomen größer ist als 50 %.

13. Registrierbare optische Speicherplatte gemäß Anspruch 9 oder 10, **dadurch gekennzeichnet, dass** die ein Übertragungsniveau von gleich oder größer als 45 % aufweisenden beschreibbaren Schichten eine zwischen 5 und 50 nm inbegriffene Stärke aufweisen.

14. Registrierbare optische Speicherplatte gemäß Anspruch 9 bis 13, **dadurch gekennzeichnet, dass** die ein Übertragungsniveau von gleich oder größer als 45 % aufweisenden beschreibbaren Schichten durch eine Kombination aus Au-Si₃Ni₄ mit einer Goldmenge von rund 80 % Atomen und einer Menge an Si₃Ni₄ von rund 20 % Atomen gebildet werden.

15. Registrierbare optische Speicherplatte gemäß Anspruch 9 bis 14, in der die beschreibbaren Schichten ein Übertragungsniveau von größer als 55 % aufweisen.

16. Durch ein Cermet-Depot auf einem Substrat (1) in einer optischen Multiniveau-Speicherplatte gebildete beschreibbare Schicht, **dadurch gekennzeichnet, dass** sie ein Übertragungsniveau von gleich oder größer als 45 % aufweist.

17. Beschreibbare Schicht gemäß Anspruch 16, **dadurch gekennzeichnet, dass** das Cermet zur aus Au-Si₃N₄, Au-Si₃N₄, Au-SiO₂, Al-Al₂O₃, In-SiO₂ gebildeten Familie gehört.

18. Beschreibbare Schicht gemäß Anspruch 16, **dadurch gekennzeichnet, dass** das Cermet eine Kombination aus Au-Si₃N₄ ist, wobei der Anteil an Goldatomen höher ist als 50 %.

19. Beschreibbare Schicht gemäß Anspruch 16, **dadurch gekennzeichnet, dass** das Cermet eine zwischen 5 und 50 nm inbegriffene Stärke aufweist.

20. Beschreibbare Schicht gemäß Anspruch 16, **dadurch gekennzeichnet, dass** das Cermet eine Kombination aus AuSi₃N₄ mit einer Goldmenge von rund 80 % Atomen und einer Menge an Si₃N₄ von rund 20 % Atomen ist.

21. Beschreibbare Schicht gemäß Anspruch 16, in der die genannte beschreibbare Schicht ein Übertragungsniveau von größer als 55 % aufweist.

22. Registrierungsverfahren einer beschreibbaren Platte durch Aktivierung einer Vielzahl von übereinander gelagerten beschreibbaren Schichten mit wenigstens einem fokalisierten Strahl in unterschiedlichen Ebenen, **dadurch gekennzeichnet, dass** es wenigstens eine Aktivierung einer in einer vorderen Ebene positionierten Schicht (7, 8) umfasst, wobei die genannte Schicht ein ein Übertragungsniveau von gleich oder größer als 45 % aufweisendes Cermet-Material mit einer zwischen 5 und 50 nm inbegriffenen Stärke und wenigstens eine Aktivierung einer in einer hinteren Ebene positionierten Schicht (9) aufweist.

23. Registrierungsverfahren einer beschreibbaren Platte gemäß Anspruch 22, in dem die beschreibbaren Schichten ein Übertragungsniveau von größer als 55 % aufweisen.
